# EUROPÄISCHE PATENTSCHRIFT

(11) **EP 2 747 223 B1**
(45) Veröffentlichungstag und Bekanntmachung des Hinweises auf die Patenterteilung: **22.06.2016**
(21) Anmeldenummer: 13198401.5
(22) Anmeldetag: 19.12.2013
(51) Int. Cl.: H02B 1/20, H02B 1/32, H02B 1/42

(54) **Verteilerschrank oder -kasten der Elektroinstallation von Gebäuden**
Distribution cabinet or electrical installation boxes of buildings
Armoire ou boîte de distribution de l'installation électrique de bâtiments

(30) Priorität: 20.12.2012 DE 102012112768
(43) Veröffentlichungstag der Anmeldung: 25.06.2014
(60) Teilanmeldung: 14200703.8
(73) Patentinhaber: Hager Electro GmbH & Co. KG, 66440 Blieskastel (DE)
(72) Erfinder: Amendola, Ettore, 57600 Oeting (FR); Vannesson, Damien, 57520 Grosbliederstroff (FR)
(74) Vertreter: Nuss, Laurent

(56) Entgegenhaltungen:
- EP-A1- 0 109 881
- EP-A1- 0 760 546
- EP-A1- 0 762 585
- EP-A1- 1 416 600
- EP-A1- 1 693 937
- DE-A1- 2 944 372
- DE-C1- 19 935 445
- ES-A1- 2 330 817
- FR-A1- 2 896 922

## Beschreibung

Die Erfindung betrifft einen Verteilerschrank oder -kasten der Elektroinstallation von Gebäuden und parallel zueinander im Abstand angeordnete Hauptträgerschienen und wenigstens eine zu der Schrank- bzw. Kastenrückwand parallele und zu den Hauptträgerschienen senkrechte Geräteträgerschiene umfasst, wobei die Geräteträgerschienen an ihren Enden jeweils über ein Verbindungsstück mit einer der Hauptträgerschienen verbindbar sind, wobei das Verbindungsstück eine Verbindung der Geräteträgerschiene mit der Hauptträgerschiene in verschiedenen Abständen von der Schrank- bzw. Kastenrückwand erlaubt, mehrteilig mit einem mit der Hauptträgerschiene verbindbaren Hauptteil und einem mit der Geräteträgerschiene verbindbaren Verlängerungsstück ausgebildet und das Verlängerungsstück formschlüssig mit dem Hauptteil durch Einschieben in eine hinterschnittene Führung parallel zur Schrank- bzw. Kastenrückwand verbindbar ist.

Derartige Verteilerschränke oder-kästen mit einem Trägerchassis zur Halterung von Schrankeinbauten sind durch Benutzung bekannt. Deren horizontale, ein Hutprofil aufweisende Geräteträgerschienen dienen in erster Linie zur Aufnahme von Schaltgeräten.

Ein Verteilerschrank oder -kasten der Elektroinstallation von Gebäuden mit den eingangs erwähnten Merkmalen geht aus der DE 29 44 372 A1 hervor. Das Verlängerungsstück des Verbindungsstücks dieses bekannten Verteilerschranks oder-kastens ist in die hinterschnittene Führung in einer Richtung parallel zu der Hauptgeräteträgerschiene einschiebbar.

Der Erfindung liegt die Aufgabe zugrunde, einen neuen Verteilerschrank bzw. -kasten der eingangs erwähnten Art zu schaffen, der bei vereinfachter Montage eine variable Positionierung von Einbauten ermöglicht.

Der Verteilerschrank nach der Erfindung ist dadurch gekennzeichnet, dass das Verlängerungsstück in die hinterschnittene Führung senkrecht zur Hauptträgerschiene von der der Geräteträgerschiene abgewandten Außenseite der Hauptträgerschiene her unter Nutzung eines sich entlang der Hauptträgerschiene erstreckenden Freiraums einschiebbar ist.

Erfindungsgemäß ist das Verlängerungsstück senkrecht zur Hauptträgerschiene von der der Geräteträgerschiene abgewandten Seite der Hauptträgerschiene her, d.h. der Außenseite des Trägerchassis her, in die hinterschnittene Führung einschiebbar. Entsprechend ist zwischen dem Chassis und einer zur Hauptträgerschiene parallelen Seitenwand des Schrankgehäuses ein Freiraum gebildet, der diese seitliche Einschiebung ermöglicht.

Vorteilhaft lassen sich Einbaugeräte im Verteilerschrank bzw. -kasten in unterschiedlichen Tiefen montieren. Bei gegebenen Abmessungen des Schrankgehäuses können damit unterschiedlich große Geräte zum Einbau kommen oder das Chassis lässt sich in Schrankgehäusen verschiedener Tiefe verwenden.

Eine Geräteträgerschiene lässt sich somit allein über das Hauptteil oder das durch das Verlängerungsstück erweiterte Hauptteil mit der Hauptträgerschiene verbinden.

Zweckmäßig lässt sich das Verlängerungsstück in der Führung einrasten und dadurch befestigen.

Zusätzlich zu der Formschlussverbindung mit dem Hauptteil kann das Verlängerungsstück an dem Hauptteil durch eine Schraubverbindung fixierbar sein.

In einer besonders bevorzugten Ausführungsform der Erfindung weist das Verbindungsstück ferner Einrichtungen zur Halterung eines Kabelkanals, vorzugsweise in verschiedenen Abständen zu der Schrank- bzw. Kastenrückwand auf. Vorteilhaft wird das Verbindungsstück somit zusätzlich funktionell genutzt, wobei die Möglichkeit der Anordnung der Kabelkanäle in unterschiedlichen Abständen zur Kastenrückwand die Verwendung von Kabelkanälen mit unterschiedlichen Abmessungen oder die Verwendung in der Tiefe unterschiedlicher Schrankgehäuse ermöglicht. Insbesondere kann durch die Anordnung der Kabelkanäle in unterschiedlichen Abständen zur Schrankrückwand gesichert sein, dass die Oberkanten aller Kabelkanäle auf gleichem Niveau liegen.

Insbesondere das Verlängerungsstück des Verbindungsstücks kann Einrichtungen zur Halterung eines außerhalb des Chassis entlang der Hauptträgerschiene verlaufenden Kabelkanals aufweisen.

Zum Beispiel kann das Verlängerungsstück mit einer Führung versehen sein, in der ein Kabelkanalhalterelement in verschiedenen Positionen einrastbar ist, sodass der gehaltene Kabelkanal unterschiedliche Abstände zur Schrank- bzw. Kastenrückwand aufweist.

Vorzugsweise der Hauptteil des Verbindungsstücks ist mit Einrichtungen zur Halterung eines entlang der Geräteträgerschiene verlaufenen Kabelkanals versehen.

Insbesondere kann durch zwei auf einer der Hauptträgerschienen mit ihren Enden aneinander grenzende Verbindungsstücke ein Sitz für die Aufnahme dieses sich entlang der Geräteträgerschienen erstreckenden Kabelkanals gebildet sein.

Vorzugsweise ist der sich entlang der Geräteträgerschiene erstreckende Kabelkanal zwischen einander gegenüberliegend auf den Geräteträgerschienen angeordneten Sitzen einrastbar.

In einer zweckmäßigen Ausführungsform übergreift das Verbindungsstück die Hauptträgerschiene U-förmig, wobei über die Hauptträgerschiene in Richtung zur Schrankrückwand vorstehende U-Schenkel die Hauptträgerschiene im Abstand zur Schrankrückwand halten.

Für den Verteilerschrank bzw. -kasten sind insbesondere baugleiche Verbindungsstücke vorgesehen, die sich, mit ihren Enden aneinander grenzend, jeweils über eine Rasterlänge entlang der Hauptträgerschienen erstrecken.

Die Verbindungsstücke können Ösenelemente zur Verbindung mit einem Kabelbinderstrang aufweisen.

Zweckmäßig sind alle durch Formschluss herstellbaren Verbindungen zwischen dem Verbindungsstück und den Kabelkanälen durch Schraubverbindungen ergänz- oder ersetzbar.

Die Erfindung wird nachfolgend anhand eines Ausführungsbeispiels und der beiliegenden, sich auf dieses Ausführungsbeispiel erstreckenden Zeichnungen näher erläutert. Es zeigen:
- Fig. 1: einen erfindungsgemäßen Verteilerschrank bzw. -kasten in perspektivischer Darstellung,
- Fig. 2: ein in dem Schrank bzw. Kasten von Fig. 1 verwendetes Trägerchassis,
- Fig. 3: eine Explosivdarstellung der Einbauten des Verteilerschranks bzw. -kastens von Fig. 1,
- Fig. 4: eine Hauptträgerschiene des Chassis von Fig. 2 mit angesetzten Verbindungsstücken teilweise in Explosivdarstellung,
- Fig. 5: eine weitere Explosivdarstellung eines in dem Verteilerkasten von Fig. 1 verwendeten Verbindungsstücks, und
- Fig. 6 bis 8: weitere Detailansichten des Innenaufbaus des Verteilerschranks oder -kastens von Fig. 1.

Ein Verteilerschrank bzw. Verteilerkasten der Elektroinstallation von Gebäuden weist ein Schrankgehäuse 1 und ein in dem Schrankgehäuse 1 untergebrachtes Chassis 2 für die Halterung von Schrankeinbauten auf.

Das Chassis 2 umfasst zwei parallel zueinander im Abstand angeordnete Hauptträgerschienen 3, die längsseitig mit einer Rückwand 4 des Schrankgehäuses 1 verbindbar sind.

Die Hauptträgerschienen 3 stehen ihrerseits miteinander durch Geräteträgerschienen 5 in Verbindung, die zu den Hauptträgerschienen 3 senkrecht verlaufen und ein Hutprofil aufweisen.

Die Verbindung zwischen den Hauptträgerschienen 3 und den Enden der drei Geräteträgerschienen 5 ist jeweils durch ein Verbindungsstück 6 aus einem Thermo- oder Duroplast hergestellt. Die baugleichen Verbindungsstücke 6 erstrecken sich jeweils entlang der betreffenden Trägerschiene 3 über eine Rasterlänge und grenzen mit ihren Enden aneinander an.

Die horizontale Breite des Chassis 2 ist geringer als die horizontale Breite des Schrankgehäuses 1. Zwischen den vertikalen Seitenwänden des Gehäuses 1 und dem Chassis 2 bestehender Freiraum kann daher für die Unterbringung eines Kabelkanals 7 genutzt werden. Ein weiterer Kabelkanal 8 befindet sich zwischen zwei der Geräteträgerschienen 5 und verläuft zu diesen parallel.

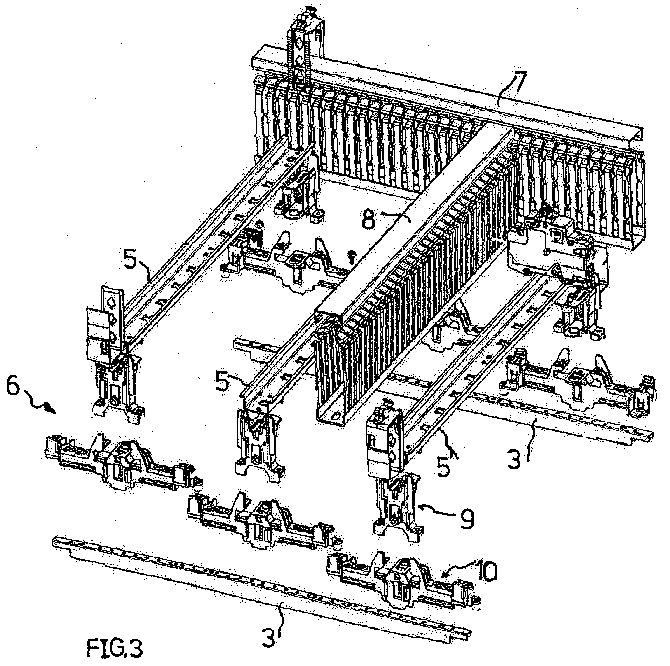

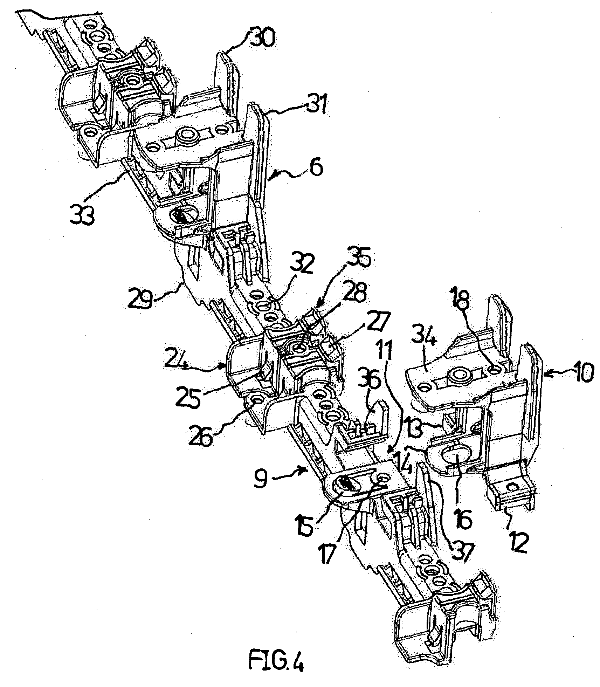

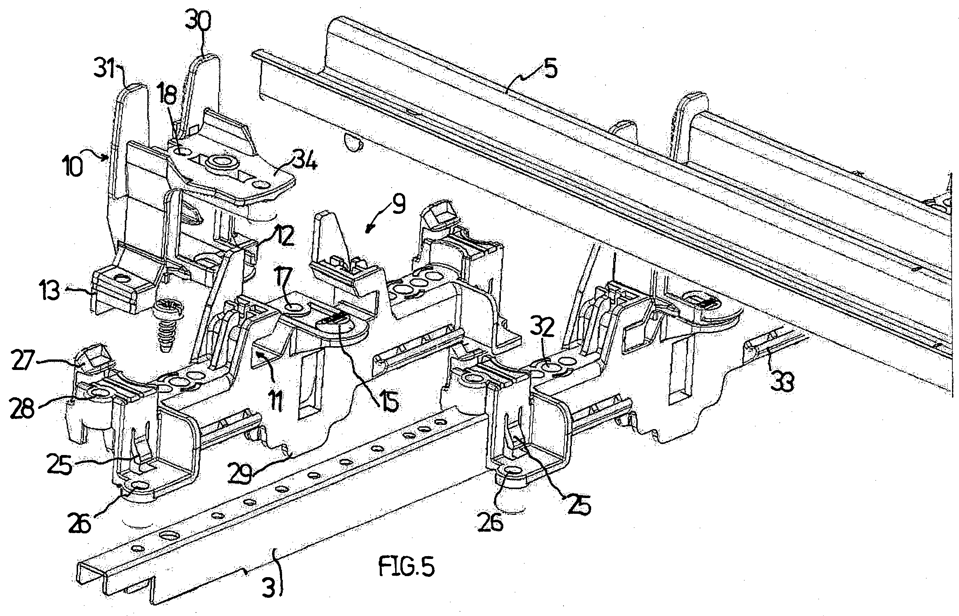

Wie insbesondere die Figuren 3 bis 5 erkennen lassen, bestehen die Verbindungsstücke 6 jeweils aus einem Hauptteil 9 und einem Verlängerungsstück 10. Das Verlängerungsstück 10, das eine Befestigungsplatte 34 für die Geräteträgerschiene 5 aufweist, lässt sich formschlüssig mit dem Hauptteil 9 verbinden, wozu es parallel zur Geräteträgerschiene 5 und parallel zur Rückwand 4 des Schrankgehäuses 1 in eine hinterschnittene Führung 11 in dem Hauptteil 9 einschiebbar und in der Führung einrastbar ist. Dabei greift das Verlängerungsstück 10 mit Auslegern 12 und 13 sowie einem Mittelstück 14 in die Führung 11 ein, wobei eine elastisch abbiegbare Rastnase 15 an dem Hauptteil 9 in einer Öffnung 16 in dem Mittelstück 14 einrastet.

Eine Verbindung zwischen einer der Hauptträgerschienen 3 und einer der Geräteträgerschienen 5 kann sowohl allein über das Hauptteil 9 des Verbindungsstücks 6 als auch das mit dem Hauptteil 9 verbundene Verlängerungsstück 10 hergestellt werden. Im ersteren Fall dient ein Loch 17 und im zweiten Fall ein Loch 18 zur Verschraubung der Geräteträgerschiene 5 mit dem Verbindungsstück 6. Auch zwischen dem Hauptteil 9 und dem Verlängerungsstück 10 sind zusätzlich zu der beschriebenen Rastverbindung Schraubenverbindungen möglich.

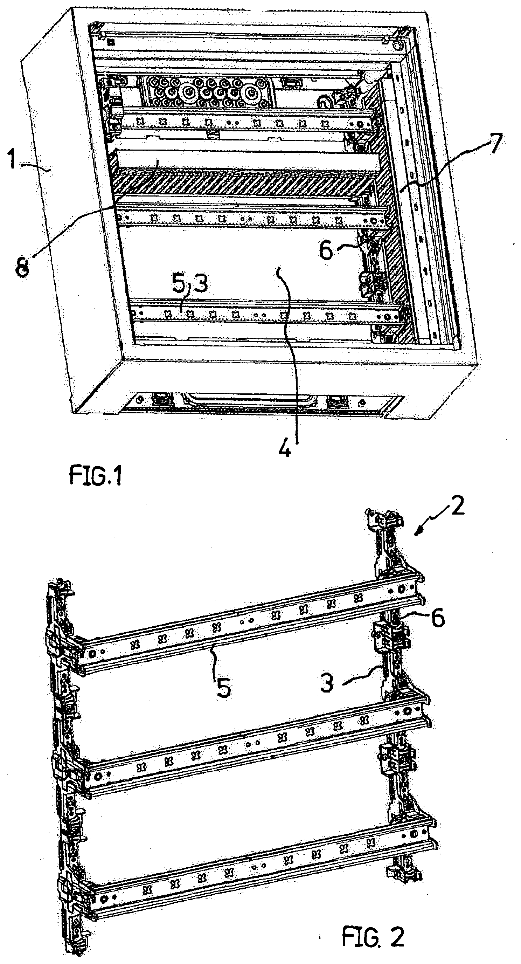

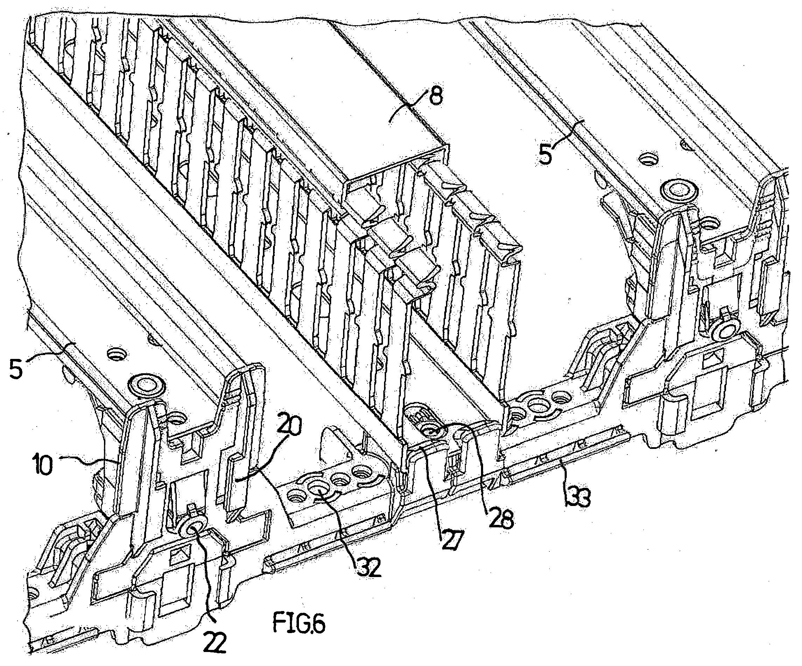

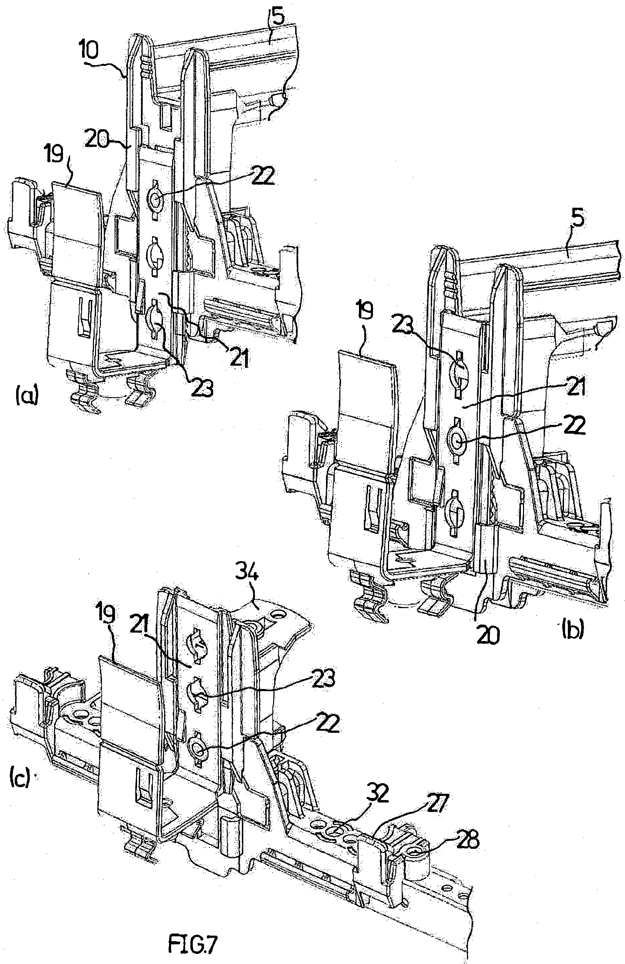

Wie aus Fig. 6 und 7 hervorgeht, weist das Verlängerungsstück 10 auf seiner dem Ende der Geräteträgerschiene 5 abgewandten Seite Einrichtungen zur Befestigung eines Kabelkanalhalters 19 auf. Diese Einrichtungen umfassen eine Führung 20 für einen Schenkel 21 des Kabelkanalhalters 19 sowie eine abbiegbare Rastnase 22. Die Rastnase 22 lässt sich mit Hilfe eines Hebels am Verlängerungsstück 10 entriegeln. Gemäß Fig. 7 kann der Kabelkanalhalter 19 in drei verschiedenen Stellungen an dem Verlängerungsstück 10 befestigt werden, wobei die Rastnase 22 in einer von drei Öffnungen 23 in dem Schenkel 21 des Kabelkanalhalters 19 einrastet. In den Kabelkanalhalter lässt sich der in Fig. 1 und 3 gezeigte Kabelkanal 7 einschieben und verrasten.

Verbindungsmöglichkeiten zu dem Kabelkanal 8 bestehen an der Stoßstelle zwischen zwei Verbindungsstücken 6, wodurch die beiden aneinander stoßenden Enden der Verbindungsstücke 6 einen Aufnahmesitz 24 für das Ende des Kabelkanals 8 bilden. Rastnasen 25 dienen zur Verrastung des Kabelkanals, ein Loch 26 zur zusätzlichen Herstellung einer Schraubverbindung.

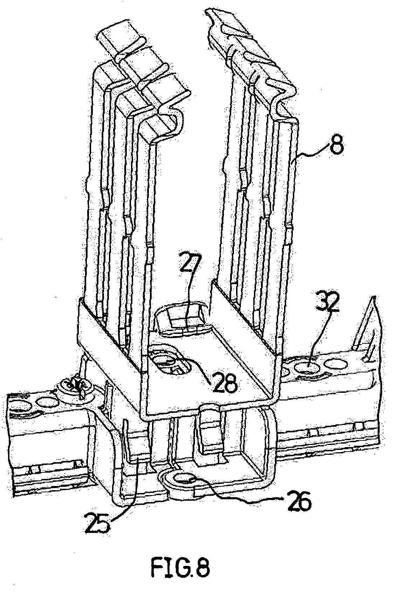

Wie der Kabelkanal 7 lässt sich auch der Kabelkanal 8 in verschiedenen Höhen über der Rückwand 4 des Schrankgehäuses 1 montieren, wozu oberhalb des Sitzes 24 ein weiterer Aufnahmesitz 35 mit Rastnasen 27 und einem Befestigungsloch 28 vorgesehen ist. Fig. 8 zeigt eine solche Befestigung eines Kabelkanals an dem oberen Sitz 35.

Der Hauptteil 9 des Verbindungsstücks 6 umgreift die Hauptträgerschiene 3 U-förmig, wobei die U-Schenkel bei 29 über die Hauptträgerschiene 3 hinaus in Richtung zur Rückwand 4 des Schrankgehäuses 1 überstehen. Die Hauptträgerschiene 3 ist durch das Verbindungsstück dadurch im Abstand von der Rückwand 4 gehalten. Vorteilhaft ist somit die Verlegung von Kabeln unter der Hauptträgerschiene 3 möglich. Auch zwischen dem Kabelkanal 8 und der Rückwand 4 ist bei Befestigung auf dem Sitz 24 eine Verlegung von Kabeln unter der Kabelführung hindurch möglich.

An dem Verlängerungsstück 10 gebildete Vorsprünge 30 und 31 dienen als Anschläge für auf der Geräteträgerschiene 5 montierte Geräte. Am Hauptteil 9 des Verbindungsstücks 6 sind entsprechende Vorsprünge 36 und 37 vorgesehen, die bei Montage der Geräteträgerschiene nur auf dem Hauptteil 9 wirksam werden.

Bei 32 gebildete Befestigungslöcher bieten weitere Möglichkeiten für die Montage einer Geräteträgerschiene.

An Ösenleisten 33, die von dem Verbindungsstück 6 abstehen, lassen sich Kabelbinder befestigen.

## Patentansprüche

1. Verteilerschrank oder -kasten der Elektroinstallation von Gebäuden, mit einem Trägerchassis (2), das parallel zur Schrank- bzw. Kastenrückwand (4) und parallel zueinander im Abstand angeordnete Hauptträgerschienen (3) und wenigstens eine zu der Schrank- bzw. Kastenrückwand (4) parallele und zu den Hauptträgerschienen (3) senkrechte Geräteträgerschiene (5) umfasst, wobei die Geräteträgerschiene (5) an ihren Enden jeweils über ein Verbindungsstück (6) mit einer der Hauptträgerschienen (3) verbindbar ist, und wobei das Verbindungsstück (6) eine Verbindung der Geräteträgerschiene (5) mit der Hauptträgerschiene (3) in verschiedenen Abständen von der Schrank- bzw. Kastenrückwand (4) erlaubt, mehrteilig mit einem mit der Hauptträgerschiene (3) verbindbaren Hauptteil (9) und einem mit der Geräteträgerschiene (5) verbindbaren Verlängerungsstück (10) ausgebildet und das Verlängerungsstück (10) formschlüssig mit dem Hauptteil (9) durch Einschieben in eine hinterschnittene Führung (11) parallel zur Schrank- bzw. Kastenrückwand (4) verbindbar ist,
**dadurch gekennzeichnet,**
**dass** das Verlängerungsstück (10) in die hinterschnittene Führung (11) senkrecht zur Hauptträgerschiene (3) von der der Geräteträgerschiene (5) abgewandten Außenseite der Hauptträgerschiene (3) her unter Nutzung eines sich außenseitig entlang der Hauptträgerschiene erstreckenden Freiraums einschiebbar ist.

2. Verteilerschrank oder -kasten nach Anspruch 1,
**dadurch gekennzeichnet,**
**dass** das Verlängerungsstück (10) des Verbindungsstücks (6) in der Führung (11) einrastbar ist.

3. Verteilerschrank oder -kasten nach Anspruch 2,
**dadurch gekennzeichnet,**
**dass** das Verlängerungsstück (10) des Verbindungsstücks (6) zusätzlich zu der Formschlussverbindung an dem Hauptteil (9) des Verbindungsstücks (6) durch eine Schraubverbindung fixierbar ist.

4. Verteilerschrank oder -kasten nach einem der Ansprüche 1 bis 3,
**dadurch gekennzeichnet,**
**dass** das Verbindungsstück (6) ferner Einrichtungen zur Halterung eines Kabelkanals (7,8), vorzugsweise in verschiedenen Abständen zu der Schrank- bzw. Kastenrückwand (4), aufweist.

5. Verteilerschrank oder -kasten nach Anspruch 4,
**dadurch gekennzeichnet,**
**dass** das Verlängerungsstück (10) des Verbindungsstücks (6) Einrichtungen zur Halterung eines außerhalb des Chassis (2) entlang der Hauptträgerschiene (3) verlaufenden Kabelkanals (7), vorzugsweise in verschiedenen Abständen von der Schrank- bzw. Kastenrückwand (4), aufweist.

6. Verteilerschrank oder-kasten nach Anspruch 5,
**dadurch gekennzeichnet,**
**dass** das Verlängerungsstück (10) eine Führung (20) aufweist, in der ein Kabelhalterelement (19) zur Halterung der sich entlang der Hauptträgerschiene (3) erstreckenden Kabelführung (7) in verschiedenen Positionen einrastbar ist.

7. Verteilerschrank oder -kasten nach einem der Ansprüche 1 bis 6,
**dadurch gekennzeichnet,**
**dass** der Hauptteil (9) des Verbindungsstücks (6) Einrichtungen zur Halterung eines entlang der Geräteträgerschiene (5) verlaufenden Kabelkanals (8), vorzugsweise in verschiedenen Abständen zur Schrank- bzw. Kastenrückwand (4), aufweist.

8. Verteilerschrank oder -kasten nach Anspruch 7,
**dadurch gekennzeichnet,**
**dass** auf den Hauptträgerschienen (3) mit ihren Enden aneinander grenzende Verbindungsstücke (6) je einen Sitz (24) für die Aufnahme des sich entlang der Geräteträgerschiene (5) erstreckenden Kabelkanals (8) bilden.

9. Verteilerschrank oder -kasten nach Anspruch 8,
**dadurch gekennzeichnet,**
**dass** der sich entlang der Geräteträgerschiene (5) erstreckende Kabelkanal (8) mit seinen Enden in Sitzen (24,35) einrastbar ist, die auf den Trägerschienen (3) einander gegenüberliegend angeordnet sind.

10. Verteilerschrank oder-kasten nach einem der Ansprüche 1 bis 9,
**dadurch gekennzeichnet,**
**dass** das Verbindungsstück (6) die Hauptträgerschiene (3) U-förmig übergreift und über die Hauptträgerschiene (3) in Richtung zur Schrank- bzw. Kastenrückwand (4) vorstehende U-Schenkel (29) aufweist, welche die Hauptträgerschiene (3) im Abstand zu der Schrank- bzw. Kastenrückwand (4) halten.

11. Verteilerschrank oder -kasten nach einem der Ansprüche 1 bis 10,
**dadurch gekennzeichnet,**
**dass** baugleiche Verbindungsstücke (6) vorgesehen sind, die sich mit ihren Enden aneinander angrenzend jeweils über eine Rasterlänge entlang der Hauptträgerschienen (3) erstrecken.

12. Verteilerschrank oder-kasten nach einem der Ansprüche 1 bis 11,
**dadurch gekennzeichnet,**
**dass** die Verbindungsstücke (6) Ösenelemente (33) zur Verbindung mit einem Kabelbinder aufweisen.

## Claims

1. Distribution cabinet or box of the electrical installation of buildings with a support chassis (2), which comprises main support rails (3) arranged parallel to the rear cabinet or box wall (4) and parallel to one another a distance apart and at least one device support rail (5) parallel to the rear cabinet or box wall (4) and perpendicular to the main support rails (3), wherein the device support rail (5) can be connected at its ends respectively via a connecting piece (6) to one of the main support rails (3), and wherein the connecting piece (6) allows a connection of the device support rail (5) to the main support rail (3) at different distances from the rear cabinet or box wall (4), is designed to have multiple parts with a main part (9) connectable to the main support rail (3) and an extension piece (10) connectable to the device support rail (5) and the extension piece (10) can be connected in a form-fitting manner to the main part (9) by pushing into an undercut guide (11) parallel to the rear cabinet or box wall (4),
**characterised in that**
the extension piece (10) can be pushed into the undercut guide (11) perpendicular to the main support rail (3) from the outside of the main support rail (3) facing away from the device support rail (5) by using a free space extending externally along the main support rail.

2. Distribution cabinet or box according to claim 1,
**characterised in that**,
the extension piece (10) of the connecting piece (6) can be locked in the guide (11).

3. Distribution cabinet or box according to claim 2,
**characterised in that**,
the extension piece (10) of the connecting piece (6) can be fixed in addition to the form-fitting connection on the main part (9) of the connecting piece (6) by a screw connection.

4. Distribution cabinet or box according to any one of claims 1 to 3,
**characterised in that**,
the connecting piece (6) also comprises devices for holding a cable channel (7, 8), preferably at different distances from the rear cabinet or box wall (4).

5. Distribution cabinet or box according to claim 4,
**characterised in that**,
the extension piece (10) of the connecting piece (6) comprises devices for holding a cable channel (7) running outside the chassis (2) along the main support rail (3), preferably at different distances from the rear cabinet or box wall (4).

6. Distribution cabinet or box according to claim 5,
**characterised in that**,
the extension piece (10) comprises a guide (20) in which a cable holding element (19) can be locked for holding the cable guide (7) extending along the main support rail (3) in different positions.

7. Distribution cabinet or box according to any one of claims 1 to 6,
**characterised in that**,
the main part (9) of the connecting piece (6) comprises devices for holding a cable channel (8) running along the device support rail (5), preferably at different distances from the rear cabinet or box wall (4).

8. Distribution cabinet or box according to claim 7,
**characterised in that**,
on the main support rails (3) connecting pieces (6) adjoining at their ends each form a seat (24) for mounting the cable channel (8) extending along the device support rail (5).

9. Distribution cabinet or box according to claim 8,
**characterised in that**,
the cable channel (8) extending along the device support rail (5) can be locked at its ends in seats (24, 35) which are arranged opposite one another on the support rails (3).

10. Distribution cabinet or box according to any one of claims 1 to 9,
**characterised in that**,
the connecting piece (6) grips over the main support rail (3) in a U-shape and comprises U-legs (29) projecting over the main support rail (3) in the direction of the rear cabinet or box wall (4), which hold the main support rail (3) at a distance from the rear cabinet or box wall (4).

11. Distribution cabinet or box according to any one of claims 1 to 10,
**characterised in that**,
structurally identical connecting pieces (6) are provided which extend with their ends adjoining one another respectively over a grid length along the main support rails (3).

12. Distribution cabinet or box according to any one of claims 1 to 11,
**characterised in that**,
the connecting pieces (6) comprise eyelet elements (33) for connecting to a cable tie.

## Revendications

1. Armoire ou coffret de distribution de l'installation électrique de bâtiments, comportant un châssis de support (2) qui comprend des rails de support principaux (3) disposés parallèlement à la paroi arrière (4) de l'armoire ou du coffret et parallèlement à distance les uns des autres et au moins un rail de support d'appareils (5) parallèle à la paroi arrière (4) de l'armoire ou du coffret et perpendiculaire aux rails de support principaux (3), le rail de support d'appareils (5) pouvant être relié à ses extrémités chaque fois par une pièce de liaison (6) à un des rails de support principaux (3), et la pièce de liaison (6) permettant une liaison du rail de support d'appareils (5) avec le rail de support principal (3) à différentes distances de la paroi arrière (4) de l'armoire ou du coffret, étant réalisée en plusieurs parties avec une partie principale (9) pouvant être reliée au rail de support principal (3) et une pièce de prolongement (10) pouvant être reliée au rail de support d'appareils (5) et la pièce de prolongement (10) pouvant être reliée par complémentarité de formes à la partie principale (9) par insertion dans un guide (11) en contre-dépouille parallèlement à la paroi arrière (4) de l'armoire ou du coffret,
caractérisé(e) en ce
que la pièce de prolongement (10) peut être insérée dans le guide (11) en contre-dépouille perpendiculairement au rail de support principal (3) depuis le côté extérieur du rail de support principal (3) éloigné du rail de support d'appareils (5) en utilisant un espace libre s'étendant extérieurement le long du rail de support principal.

2. Armoire ou coffret de distribution selon la revendication 1,
caractérisé(e) en ce
que la pièce de prolongement (10) de la pièce de liaison (6) est encliquetable dans le guide (11).

3. Armoire ou coffret de distribution selon la revendication 2,
caractérisé(e) en ce
que la pièce de prolongement (10) de la pièce de liaison (6), en plus de la liaison par complémentarité de formes, peut être fixée à la partie principale (9) de la pièce de liaison (6) par une liaison vissée.

4. Armoire ou coffret de distribution selon l'une des revendications 1 à 3,
caractérisé(e) en ce
que la pièce de liaison (6) présente en outre des moyens de fixation d'un conduit de câbles (7, 8), de préférence à différentes distances de la paroi arrière (4) de l'armoire ou du coffret.

5. Armoire ou coffret de distribution selon la revendication 4,
caractérisé(e) en ce
que la pièce de prolongement (10) de la pièce de liaison (6) présente des moyens de fixation d'un conduit de câbles (7) s'étendant à l'extérieur du châssis (2) le long du rail de support principal (3), de préférence à différentes distances de la paroi arrière (4) de l'armoire ou du coffret.

6. Armoire ou coffret de distribution selon la revendication 5,
caractérisé(e) en ce
que la pièce de prolongement (10) présente un guide (20) dans lequel un élément d'attache de câbles (19) pour la fixation du guide de câbles (7) s'étendant le long du rail de support principal (3) est encliquetable dans différentes positions.

7. Armoire ou coffret de distribution selon l'une des revendications 1 à 6,
caractérisé(e) en ce
que la partie principale (9) de la pièce de liaison (6) présente des moyens pour la fixation d'un conduit de câbles (8) s'étendant le long du rail de support d'appareils (5), de préférence à différentes distances de la paroi arrière (4) de l'armoire ou du coffret.

8. Armoire ou coffret de distribution selon la revendication 7,
caractérisé(e) en ce
que des pièces de liaison (6) adjacentes par leurs extrémités sur les rails de support principaux (3) forment chaque fois un siège (24) pour la réception du conduit de câbles (8) s'étendant le long du rail de support d'appareils (5).

9. Armoire ou coffret de distribution selon la revendication 8,
caractérisé(e) en ce
que le conduit de câbles (8) s'étendant le long du rail de support d'appareils (5) est encliquetable par ses extrémités dans des sièges (24, 35) qui sont disposés l'un en face de l'autre sur les rails de support (3).

10. Armoire ou coffret de distribution selon l'une des revendications 1 à 9,
caractérisé(e) en ce
que la pièce de liaison (6) chevauche le rail de support principal (3) en forme de U et présente des branches de U (29) faisant saillie du rail de support principal (3) en direction de la paroi arrière (4) de l'armoire ou du coffret, lesquelles maintiennent le rail de support principal (3) à distance de la paroi arrière (4) de l'armoire ou du coffret.

11. Armoire ou coffret de distribution selon l'une des revendications 1 à 10,
caractérisé(e) en ce
que des pièces de liaison (6) identiques sont prévues, qui s'étendent de façon adjacente par leurs extrémités chaque fois sur une longueur de trame le long des rails de support principaux (3).

12. Armoire ou coffret de distribution selon l'une des revendications 1 à 11,
caractérisé(e) en ce
que les pièces de liaison (6) présentent des éléments en oeillet (33) pour la liaison avec un serre-câble.
